Europäisches Patentamt

European Patent Office

Office européen des brevets

(19)

(11) Numéro de publication : **0 430 784 B1**

# (12) FASCICULE DE BREVET EUROPEEN

(45) Date de publication du fascicule du brevet :
**25.08.93 Bulletin 93/34**

(51) Int. Cl.⁵ : **A23L 1/32**

(21) Numéro de dépôt : **90403328.9**

(22) Date de dépôt : **23.11.90**

(54) Composition hypocalorique à qualités organoleptiques analogues à celles de l'oeuf entier de poule et à propriétés nutritionnelles amélioréeset son procédé de préparation.

(30) Priorité : **27.11.89 FR 8915556**

(43) Date de publication de la demande :
**05.06.91 Bulletin 91/23**

(45) Mention de la délivrance du brevet :
**25.08.93 Bulletin 93/34**

(84) Etats contractants désignés :
**AT BE CH DE DK ES FR GB GR IT LI LU NL SE**

(56) Documents cités :
**FR-A- 2 023 432**
**US-A- 3 958 034**
**W.J.STADELMAN: "Egg Science and Technology" 1973, The Avi Publishing Co., Westport, Connecticut, USA**
**CANADIAN JOURNAL OF BIOCHEMISTRY AND PHYSIOLOGIE vol. 39, 1961, pages 1295 - 1307; R.W.BURLEY: "ISOLATION AND COMPOSITION OF AVIAN EGG YOLK GRANULES AND THEIR CONSTITUENT..."**

(56) Documents cités :
**FOOD SCIENCE & TECHNOLOGY ABSTRACTS, 1982;AN No. 82058900,INTERNATIONAL FOOD INFORMATION SERVICE; T.WAKAMATU, "DETERMINATION OF MAIN MINERAL CONTENTS IN HEN'S EGG YOLK FRACTIONS" & AGRICULTURAL & BIOCHEMICAL CHEMISTRY, VOL 46, No.2, 1982, pp577-578**

(73) Titulaire : **EUROPE PROTEINES INDUSTRIES BRETAGNE Société Anonyme**
**41, rue des Hauts Chemins**
**F-22360 Langueux (FR)**

(72) Inventeur : **Corlay, Yvon**
**Kérandivez**
**F-29400 Plouneventer (FR)**
Inventeur : **Causeret, Denis**
**15, rue Brizeux**
**F-22000 St. Brieuc (FR)**
Inventeur : **Lorient, Denis**
**2 Allée Louis Guerret**
**F-21240 Talant (FR)**

(74) Mandataire : **Bourgognon, Jean-Marie et al**
**Cabinet Flechner 22, Avenue de Friedland**
**F-75008 Paris (FR)**

## Description

La présente invention est relative aux compositions hypocaloriques, à propriétés organoleptiques analogues à celles de l'oeuf entier de poule et à propriétés nutritionnelles améliorées. L'invention vise également les procédés de préparation de ces compositions.

A la demande de brevet en République Fédérale d'Allemagne publiée sous le No 2 344 057, on prépare une composition allégée en cholestérol, en remplaçant le jaune riche en ce produit par de l'huile. Une composition de ce genre n'est pas hypocalorique. Elle n'a pas non plus des qualités organoleptiques analogues à celles de l'oeuf entier.

Au FR-A-2 023 432, on décrit une préparation comprenant du jaune d'oeuf dégraissé par de l'hexane. Ce solvant est interdit dans l'industrie alimentaire et on en retrouve dans le produit final. La composition décrite a une composition et des propriétés différentes et une saveur différente de celle suivant l'invention. Alors que les granules du jaune d'oeuf sont constitués d'une association lipovitellines-phosvitine-LDL et que la poudre de granules a un taux de matières grasses de 33 % en poids, le jaune d'oeuf dégraissé à l'hexane contient bien moins de phosvitine riche en phosphore, renferme d'autres protéines, telles que les $\alpha$, $\beta$, et $\gamma$ livétines dépourvues de phosphore et contient 13 % en poids de matières grasses. Or une partie du phosphore de l'oeuf est contenue dans les lipides. Il s'ensuit que la préparation décrite à l'exemple 2 du FR-A-2 023 432, ne contenant que 0,9 % en poids de lipides et appauvrie en phosvitine, a une teneur en phosphore bien inférieure à 0,6 % en poids, qui est celle de l'oeuf entier. De plus sa teneur en fer est inférieure à 0,003 %.

La présente invention vise une composition à base de constituants issus de l'oeuf lui-même, qui est allégée en cholestérol et pour partie en lipides et qui est ainsi hypocalorique, tout en ayant sensiblement les mêmes caractéristiques organoleptiques que celles de l'oeuf entier et en étant enrichie en phosphore, ce qui favorise notamment la fixation des matières minérales, et en fer, ces enrichissements étant recherchés nutritionnellement.

On peut préparer une composition suivant l'invention en mélangeant de 60 à 80 % et, de préférence, de 65 à 75 % en poids de blanc d'oeuf à 7 à 20 % et, de préférence, à 9 à 13 % en poids, exprimés en matières sèches, de granules de jaune d'oeuf et à 0 à 33 % en poids d'eau.

On a constaté, en effet, que dans le jaune d'oeuf qui peut être fractionné en granules, d'une part, et en plasma d'autre part, la plus grande partie du cholestérol et une partie et des lipides se retrouve dans le plasma. En supprimant celui-ci du jaune d'oeuf pour n'en conserver que les granules, on obtient un produit qui, mélangé à du blanc d'oeuf et, le cas échéant, à de l'eau, est allégé en cholestérol et pour partie en lipides et a donc une moindre valeur calorique, mais qui conserve cependant les propriétés gustatives et organoleptiques de l'oeuf entier, puisqu'à l'exception du plasma qui s'avère avoir peu d'importance pour ces propriétés, cette composition est en tout point analogue à un oeuf entier, les propriétés nutritionnelles étant améliorées par un enrichissement en phosphore et en fer.

On trouvera une description d'un procédé de préparation de granules du jaune d'oeuf dans un article de R.W. Burley et W.H. Cook, intitulé isolation and composition of avian egg yolk granules and their constituent $\alpha$ et $\beta$ lipovitellins, Can. J. Biochem. Physiol., Vol. 39 (1961), pages 1295 à 1307. Un procédé de fractionnement du jaune d'oeuf en du plasma et en des granules, qui est plus intéressant industriellement, consiste à disperser du jaune d'oeuf frais dans un homogénéiseur à effet de cisaillement, à une température inférieure à 20°C, pour obtenir du jaune d'oeuf dispersé, à porter le jaune d'oeuf dispersé à une température comprise entre 40 et 70°C et à effectuer une centrifugation à cette température, la proportion pondérale du jaune d'oeuf dilué dans l'eau étant de 0,5 à 3 parties d'eau pour une partie de jaune d'oeuf, la dispersion s'effectuant avantageusement dans un broyeur colloïdal de type Stephan modèle Microcut MC10, avec un débit de sortie du produit compris entre 80 et 1200 kg/h, et la centrifugation s'effectuant dans un décanteur centrifuge à une accélération centrifuge inférieure à 10.000 g. Il est en outre recommandé d'additionner le jaune d'oeuf de 0,5 à 2 % en poids d'un sel, notamment de ClNa, de préférence avant la dispersion (EP-A-O 460 757).

La préparation de la composition suivant l'invention s'effectue par simple mélange des constituants, à une température inférieure à 50°C, un chauffage à une température de 25 à 40°C et l'addition de chlorure de sodium en des quantités représentant de 1 à 5 % en poids pouvant faciliter le mélange.

Phospore.

On obtient ainsi une composition à base d'oeuf qui consiste, en pourcentages pondéraux, en 75 à 85 % d'eau, en 0,5 à 7 % de matières minérales dont au moins 0,003 % et, de préférence, au moins 0,005 % de fer, en moins de 0,3 et, de préférence, en moins de 0,2 % de cholestérol, en moins de 6 % et, mieux, de 2 à 3,5 % de lipides, en 10 à 17 % de protéines, dont plus de 0,80 % et, de préférence, plus de 1 % de tyrosine, l'extrait sec ayant une teneur en phosphore de 0,7 à 1 % en poids.

On constate, en effet, qu'une composition obtenue par le procédé suivant l'invention, outre qu'elle est appauvrie en cholestérol et en lipides, a des teneurs en fer et en phosphore remarquablement élevées, la teneur en fer atteignant couramment 0,007 % et est enrichie en l'acide aminé qu'est la tyrosine.

Une composition suivant l'invention a une valeur calorique inférieure à 500 kjoule pour 100 g et, de préférence, inférieure à 350 kjoule pour 100 g.

Les exemples suivants illustrent l'invention.

Dans ces exemples, on a effectué les analyses de la manière suivante.

**Matières sèches.**

On pèse 5 g d'échantillon dans une coupelle d'aluminium et on la met à l'étuve à 100°C pendant une nuit. Après refroidissement dans un dessicateur, on pèse l'échantillon. La matière sèche est exprimée en pourcentage par le rapport des deux poids.

**Protéines.**

On détermine la valeur en matière azotée totale par la méthode de Kjeldahl. Le taux de protéines est obtenu en multipliant le résultat par 6,25 (Romanoff et Romanoff, 1949, AOAC, 1980) et est exprimé en pourcentage par le rapport des poids.

**Lipides.**

On obtient la teneur en graisse après hydrolyse acide en milieu chlorhydrique (AOAC, 1980, Association of Official Agricultural Chemists). On extrait les lipides à l'éther que l'on évapore ensuite. On sèche l'échantillon à l'étuve à 100°C, on le refroidit et on le pèse. Les résultats sont exprimés en pourcentage de matières grasses (poids/poids).

**Matières minérales.**

On pèse 20 g ($P_1$) de produit que l'on place pendant une nuit à l'étuve à 100°C. On brûle la matière organique sur une plaque chauffante à 200°C et on place l'échantillon au four à 550°C pendant une nuit. On pèse ($P_2$) et on exprime les résultats $P_2/P_1$ en pourcentages.

**Fer.**

On dose le fer par spectrophotométrie d'absorption atomique. La solution contenant l'élément à doser est pulvérisée dans une flamme, après dilution dans de l'eau très pure. On détermine la teneur en fer par rapport à une gamme-étalon préparée à partir de solutions standard à 1000 parties par million de partie. L'excitation d'un atome par absorption d'un photon provoque une diminution de l'intensité du faisceau lumineux qui est fonction de la concentration du fer à doser. On opère avec une intensité maximale de la lampe de 15 mA, une longueur d'onde de 248,3 nm, dans une flamme de type oxydant.

**Phosphore.**

On mesure la teneur en phosphore par la méthode de Delsal J.L. et Manhouri, 1958, dosage colorimétrique du phosphore, spectrométrie dans l'ultraviolet, Bull. Soc. Chem. Biol., 40, pages 1169 à 1179, qui consiste à minéraliser à chaud la matière organique en milieu nitrosulfoperchlorique, à transformer l'acide phosphorique en acide phosphomolydique, en présence d'heptamolybdate d'ammonium, puis à le réduire par l'acide amino-1-naphtol-2-sulfonique-4. On apprécie la coloration bleue par colorimétrie à 750 nm et on exprime en pourcentage de phosphore à l'aide d'une courbe-étalon.

**Cholestérol.**

On dose le cholestérol à l'aide d'un coffret Boehringer (référence 139050). A 1 g d'une composition suivant l'invention, on ajoute 1 g de sable, 20 ml de solution méthanolique d'hydroxyde de potassium M et 10 ml d'isopropanol. On chauffe le mélange pendant 30 minutes à 100°C avec condensation des vapeurs, on le refroidit, on solution par la cholestéroloxydase en cholesténone. En présence de catalase, le peroxyde d'hydrogène formé oxyde le méthanol en formaldéhyde. Ce dernier réagit sur l'acétylacétone en présence d'ions $NH4^+$ et forme de la lutidine, dont on mesure la coloration jaune par l'intermédiaire de l'absorbance à 405 nm.

Acides aminés.

On détermine la composition en acides aminés au moyen d'un autoanalyseur Beckman 119CL. Un volume de 2 ml de solution protéique à 1 % est mis en présence de 5 ml d'acide chlorhydrique 12N dans une ampoule scellée sous vide. On effectue l'hydrolyse de l'échantillon pendant 24 heures à 110°C. Après évaporation sous vide, on reprend le résidu dans 2 ml d'HCl 0,1 N, puis on le filtre sur filtre-membrane millipores SMW PO,130. A 100 microlitres de la solution d'acides aminés, on ajoute 100 microlitres de norleucine (étalon interne) à 2,5 micromoles/ml. On injecte 50 microlitres du mélange dans une colonne garnie d'une résine échangeuse de cations W3H. On effectue l'élution avec un gradient discontinu de pH et de force ionique. Les acides aminés sont élués en fonction de leur pHI et sont dosés automatiquement par la réaction à la ninhydrine à 95°C. On mesure leur densité optique à 570 nm (à 440 pour la proline). Le calcul des surfaces des pics relatifs aux acides aminés d'une solution équimolaire standard permet de définir le coefficient de réponse:

$$K1 = \frac{\text{Surface du pic de norleucine dans le standard}}{\text{Surface du pic de l'acide aminé dans le standard}}$$

$$K2 = \frac{\text{Surface du pic de l'acide aminé dans l'échantillon}}{\text{Surface du pic de norleucine dans l'échantillon}}$$

La quantité de chaque acide aminé dans l'échantillon analysé est donnée par le calcul suivant:

$$Q = 2,5 \ K1.K2.V.PM. \frac{0,1}{p} . \frac{1}{d},$$

avec

V: volume injecté (µl)
PM: poids moléculaire de l'acide aminé considéré
P: masse de l'échantillon hydrolysé (mg)
d: dilution de l'échantillon.

EXEMPLE 1

On mélange 650 g de blanc d'oeuf, 222 g de granules de jaune d'oeuf préparées depuis moins de 5 jours et 128 g d'eau à la température ambiante. On mélange le tout pendant une minute pour homogénéiser, à l'aide d'un homogénéisateur "polytron P. T. 10-" (tournant à la vitesse 2).
On obtient ainsi 1 kg d'une composition suivant l'invention.

EXEMPLE COMPARATIF 1

On casse 22 oeufs frais que l'on homogénéise de la même façon qu'à l'exemple ci-dessus.
On donne, aux tableaux I à III ci-dessous, les résultats des analyses effectuées sur cette préparation d'oeufs frais.

TABLEAU I

|  | Exemple I | | Exemple comparatif | |
|---|---|---|---|---|
|  | Sur brut | Sur sec | Sur brut | Sur sec |
| Matière sèche | 15,16 % |  | 24,13 % |  |
| Matières minérales | 1,00 % | 6,58 % | 1,00 % | 4,14 % |
| Fer | 0,007 % | 0,0495 % | 0,0023 % | 0,0097 % |
| Phosphore | 0,13 % | 0,85 % | 0,15 % | 0,62 % |

TABLEAU II

| Teneur en cholestérol | % |
|---|---|
| Exemple 1 | 0,18 |
| Exemple comparatif | 0,50 |

TABLEAU III

| | Exemple comparatif | Exemple 1 |
|---|---|---|
| Alanine | 0,77 % | 0,80 % |
| Arginine | 0,73 | 0,72 |
| Acide aspartique | 1,25 | 1,23 |
| Cystine | 0,54 | 0,58 |
| Acide glutamique | 1,71 | 1,67 |
| Glycine | 0,44 | 0,40 |
| Histidine | - | - |
| Isoleucine | 1,01 | 0,99 |
| Leucine | 0,74 | 0,87 |
| Lysine | 0,91 | 0,93 |
| Phénylalanine | 0,73 | 0,76 |
| Proline | 0,47 | 0,47 |
| Sérine | 0,98 | 0,97 |
| Thréonine | 0,58 | 0,59 |
| Tyrosine | 0,63 | 1,10 |
| Valine | 0,83 | 0,80 |

EXEMPLE 2

On mélange 650 g de blanc d'oeuf, 102 g de poudre de granules à 98 % d'extrait sec et 248 g d'eau. On obtient 1 kg d'une composition hypocalorique analogue à l'oeuf entier. Tout comme la composition de l'exemple 1, elle a une valeur calorifique de 343 kjoule par 100 g.

EXEMPLE 3

On mélange 417 g de poudre de blanc d'oeuf et 583 g de poudre de granules, pour obtenir 1 kg d'analogue d'oeuf entier déshydraté.
Pour reformer 1 kg de composition liquide, on mélange 200 g de cette poudre à 800 g d'eau.

EXEMPLE 4

On préchauffe à 180°C une poêle huilée, on y verse 130 g de la composition de l'exemple 1, on fait cuire pendant 2 minutes, on plie l'omelette ainsi obtenue, on la laisse refroidir et on la met en réfrigérateur entre 0 et +4°C.

EP 0 430 784 B1

EXEMPLE 5

On prépare un quatre-quarts suivant l'invention, en mélangeant 26,60 % en poids de sucre à 23 % en poids de la composition suivant l'exemple 1, dans un homogénéisateur pendant 1,5 minute. Puis on ajoute 25 % en poids de farine, du sorbitol et de la poudre à lever et l'on continue à homogénéiser pendant 3,30 minutes. On ajoute ensuite 22 % en poids de beurre et on homogénéise pendant 6 minutes, puis 1,0 % de sel en homogénéisant pendant 7 minutes et demie. On sort le mélange de l'homogénéisateur, on le place dans un moule et on le fait cuire au four, à 180°C pendant 20 minutes, puis à 170°C pendant 25 minutes. On démoule et on laisse refroidir pour obtenir un quatre-quarts suivant l'invention.

EXEMPLE COMPARATIF 2

On reprend l'exemple précédent, mais en remplaçant les 23 % en poids de composition analogue à celle de l'oeuf, par 14,95 % en poids de blanc d'oeuf et par 8,05 % de jaune d'oeuf.

On donne les deux quatre-quarts préparés comme à l'exemple précédent et comme à l'exemple comparatif 2 ci-dessus, à déguster à un jury de 10 personnes. 9 personnes sur 10 ne détectent aucune différence organoleptique entre les deux produits.

**Revendications**

1.  Composition à base d'oeuf, caractérisée en ce qu'elle consiste, en pourcentages pondéraux, en 75 % à 85 % d'eau, en 0,5 à 7 % de matières minérales dont au moins 0,003 % et, de préférence, au moins 0,005 % de fer, en moins de 0,3 % et, de préférence, en moins de 0,2 % de cholestérol, en moins de 6 % et, mieux, en 2 à 3,5 % de lipides et en 10 à 17 % de protéines dont plus de 0,80 % et, de préférence, plus de 1 % de tyrosine, l'extrait sec ayant une teneur en phosphore de 0,7 à 1 % en poids.

2.  Composition suivant la revendication 1, caractérisée en ce qu'elle consiste en plus de 0,007 % en poids de fer.

3.  Composition suivant la revendication 1 ou 2, caractérisée en ce que la composition en pourcentage pondéral en acides aminés est la suivante: alanine 0,80 %, arginine 0,72 %, acide aspartique 1,23 %, cystine 0,58 %, acide glutamique 1,67 %, glycine 0,40 %, isoleucine 0,99 %, leucine 0,87 %, lysine 0,93 %, phénylalanine 0,76 %, proline 0,47 %, sérine 0,97 %, thréonine 0,59 %, tyrosine 1,10 % et valine 0,80 %.

4.  Composition suivant l'une des revendications précédentes, caractérisée en ce qu'elle a une valeur calorique inférieure à 500 kjoule pour 100 g et, de préférence, inférieure à 350 kjoule pour 100 g.

5.  Procédé de préparation d'une composition à base d'oeuf, suivant les revendications 1 à 4 caractérisé en ce qu'il consiste à mélanger de 60 à 80 % et, de préférence, de 65 à 75 % en poids de blanc d'oeuf, à 7 à 20 % et, de préférence, à 9 à 13 % en poids, exprimés en matières sèches, de granules de jaune d'oeuf et à 0 à 33 % en poids d'eau.

**Patentansprüche**

1.  Ei-Zusammensetzung,
    gekennzeichnet durch
    nachstehende Zusammensetzung:
    75 bis 85 Gew.-% Wasser,
    0,5 bis 7 Gew.-% mineralisches Material, einschließlich
    wenigstens 0,003 Gew.-% und vorzugsweise
    wenigstens 0,005 Gew.-% Eisen,
    weniger als 0,3 Gew.-% und vorzugsweise
    weniger als 0, 2 Gew.-% Cholesterin,
    weniger als 6 Gew.-% und noch besser
    2 bis 3,5 Gew.-% Lipide,
    10 bis 17 Gew.-% Proteine, einschließlich

7

mehr als 0,80 Gew.-% und vorzugsweise
mehr als 1 Gew.-% Tyrosin, und
Trockenextrakt mit einem Phosphorgehalt von 0,7 bis 1 Gew.-% .

2. Ei-Zusammensetzung nach Anspruch 1,
<u>gekennzeichnet durch</u>
einen Gehalt von mehr als 0,007 Gew.-% Eisen.

3. Ei-Zusammensetzung nach Anspruch 1 oder 2,
<u>gekennzeichnet durch</u>
nachstehende Gehalte an Aminosäuren:
0,80 Gew.-% Alanin,
0,72 Gew.-% Arginin,
1,23 Gew.-% Asparaginsäure,
0,58 Gew.-% Cystin,
1,67 Gew.-% Glutaminsäure,
0,40 Gew.-% Glycin,
0,99 Gew.-% Isoleucin,
0,87 Gew.-% Leucin,
0,93 Gew.-% Lysin,
0,76 Gew.-% Phenylalanin,
0,47 Gew.-% Prolin,
0,97 Gew.-% Serin,
0,59 Gew.-% Threonin,
1,10 Gew.-% Tyrosin, und
0,80 Gew.-% Valin.

4. Ei-Zusammensetzung nach einem der Ansprüche 1 bis 3,
<u>gekennzeichnet durch</u>
einen Nährwert von weniger als 500 kJoule pro 100 Gramm, und vorzugsweise durch einen Nährwert von weniger als 350 kJoule pro 100 Gramm.

5. Verfahren zur Herstellung
einer Ei-Zusammensetzung nach einem der Ansprüche 1 bis 4,
<u>dadurch gekennzeichnet</u>, daß
miteinander vermischt werden:
60 bis 80 Gew.-% und vorzugsweise
60 bis 75 Gew.-% Eiweiß,
7 bis 20 Gew.-% und vorzugsweise
9 bis 13 Gew.-% (ausgedrückt als Trockenmasse) Körnchen aus Eigelb, und
0 bis 33 Gew.-% Wasser.

**Claims**

1. Egg-based composition, characterised in that it consists, in percentages by weight, of 75 % to 85 % of water, 0.5 to 7 % of mineral matter, including at least 0.003 % and preferably at least 0.005 % of iron, less than 0.3 % and preferably less than 0.2 % of cholesterol, less than 6 % and preferably 2 to 3.5 % of lipids, and 10 to 17 % of proteins, including more than 0.80 % and preferably more than 1 % of tyrosine, the dry extract having a phosphorous content of 0.7 to 1 % by weight.

2. Composition according to claim 1, characterised in that it consists of more than 0.007 % by weight of iron.

3. Composition according to claim 1 or claim 2, characterised in that the amino acid content in percentage by weight is as follows: alanine 0.80 %, arginine 0.72 %, aspartic acid 1.23 %, cystine 0.58 %, glutamic acid 1.67 %, glycine 0.40 %, isoleucine 0.99 %, leucine 0.87 %, lysine 0.93 %, phenylalanine 0.76 %, proline 0.47 %, serine 0.97 %, threonine 0.59 %, tyrosine 1.10 % and valine 0.80 %.

4. Composition according to one of the preceding claims, characterised in that it has a heat value of less than 500 kjoules per 100 g and preferably less than 350 kjoules per 100 g.

5. Process for the preparation of an egg-based composition according to claims 1 to 4, characterised in that it consists in mixing 60 to 80 % and preferably 65 to 75 % by weight of egg white, 7 to 20 % and preferably 9 to 13 % by weight, expressed in dry matter, of egg yolk granules and 0 to 33 % by weight of water.